# EUROPÄISCHE PATENTSCHRIFT

(11) **EP 3 492 794 B1**
(45) Veröffentlichungstag und Bekanntmachung des Hinweises auf die Patenterteilung: **14.04.2021**
(21) Anmeldenummer: 18207711.5
(22) Anmeldetag: 22.11.2018
(51) Int. Cl.: F02M 25/06, F02D 41/22, F01M 13/04, F01M 11/10, F16L 39/02, F16L 39/00, F02M 35/10, F01M 13/02

(54) **ANORDNUNG ZUM ABLEITEN VON BLOW-BY-GASEN AUS EINEM KURBELGEHÄUSE EINES VERBRENNUNGSMOTORS**
ARRANGEMENT FOR DIVERTING BLOW-BY GASES FROM THE CRANKCASE OF A COMBUSTION ENGINE
DISPOSITIF D'ÉVACUATION DES GAZ DE FUITE D'UN CARTER D'UN MOTEUR À COMBUSTION INTERNE

(30) Priorität: 01.12.2017 DE 102017221735
(43) Veröffentlichungstag der Anmeldung: 05.06.2019
(73) Patentinhaber: VOLKSWAGEN AKTIENGESELLSCHAFT, 38440 Wolfsburg (DE)
(72) Erfinder: Hein, Thomas, 06484 Quedlinburg (DE); Badstübner, Andre, 08107 Kirchberg (DE)

(56) Entgegenhaltungen:
- EP-A1- 2 012 052
- WO-A1-02/103236
- DE-A1-102005 030 457
- DE-A1-102016 005 972
- US-A1- 2014 306 448

## Beschreibung

Die Erfindung betrifft eine Anordnung zum Ableiten von Blow-By-Gasen aus einem Kurbelgehäuse eines Verbrennungsmotors mit den Merkmalen des Oberbegriffs des Patentanspruchs 1.

Im Betrieb eines Verbrennungsmotors gelangen Blow-By-Gase aufgrund unvermeidlicher Leckagen zwischen dem Kolben und dem Zylinder in ein Kurbelgehäuse des Verbrennungsmotors. Damit im Kurbelgehäuse kein unzulässig hoher Druck entsteht, werden die Blow-By-Gase mit Hilfe einer Schlauchvorrichtung abgeführt. Um dabei eine Umweltverschmutzung durch die schadstoffbeladenen Blow-By-Gase zu vermeiden, werden die Blow-By-Gase der Frischluftanlage zugeleitet. Damit können die Blow-By-Gase erneut der Verbrennung im Verbrennungsmotor zugeführt werden. Die Schlauchvorrichtung weist dazu eine Blow-By-Leitung auf.

Um die Schlauchvorrichtung an die entsprechenden Bauteile anzuschließen, sind nun im Stand der Technik verschiedene Möglichkeiten bekannt.

Aus der DE 2004 063 459 A1 ist eine Anordnung bekannt, wobei ein Schlauch über einen Stutzen an eine Leitung der Frischluftanlage angeschlossen ist. Der Schlauch wird dazu mit einem Austrittsabschnitt direkt auf den Eintrittsabschnitt des Stutzens aufgesteckt. Zur Sicherung der Verbindung ist wenigstens eine fensterartige Seitenöffnung im Austrittsabschnitt vorhanden, in welche ein am Eintrittsabschnitt ausgebildeter Widerhaken eingreift. Der Schlauch ist zumindest an seinem Austrittsabschnitt durch die Formgebung und/oder die Materialauswahl so ausgestaltet, dass er sich beim Aufstecken auf den Eintrittsabschnitt des Stutzens reversibel verformt. Die wenigstens eine Seitenöffnung ist als Langloch ausgestaltet, das sich über 30° bis 45° in Umfangsrichtung erstreckt. Der Stutzen ist an seinem Eintrittsabschnitt mit zwei Ringnuten ausgestaltet. In diese Ringnuten ist jeweils ein Dichtring eingesetzt. Der Schlauch ist als Wellschlauch ausgebildet.

Aus der WO 2007/000125 A1 ist eine Anordnung zum Ableiten von Blow-By-Gasen aus einem Kurbelgehäuse eines Verbrennungsmotors bekannt. Diese Anordnung weist ein Kupplungssystem zum Verbinden eines Schlauchs mit einer Buchse auf. Der Schlauch weist an seinem Enden einen Stutzen auf, der in die Buchse einsteckbar ist und der an seiner Außenseite wenigstens eine Ringnut und eine Befestigungskontur aufweist. Die Buchse weist an ihrer Außenseite eine Rastkontur auf. Ein bezüglich der Buchse und des Stutzens separat hergestelltes Kupplungselement ist vorgesehen, das außen auf den Stutzen aufgesteckt ist, wobei das Kupplungselement mehrere Rasthaken aufweist, die die Rastkontur hintergreifen. Das Kupplungselement weist wenigstens einen Befestigungshaken auf, der zu axialen Fixierung des Kupplungselementes am Stutzen mit der Befestigungskontur zusammenwirkt. Der Schlauch kann zusammen mit dem jeweiligen Stutzen als Blasformteil ausgestaltet sein. Jeder der Rasthaken ist mit einem Lösehebel versehen. Durch die Betätigung des Lösehebels kann der jeweilige Rasthaken von der Rastkontur ausgerastet werden. Die Lösehebel bilden eine Verlängerung des jeweiligen Rasthakens. Ein Bereich eines Basisrings wirkt dabei als Drehlager für die durch die Lösehebel verlängerten Rasthaken.

Die gattungsbildende Anordnung ist noch nicht optimal ausgebildet. Der Anschluss der Schläuche ist zwar vereinfacht, es ist jedoch wünschenswert undichte bzw. nicht korrekt montierte Schlauchanordnungen sicher zu vermeiden.

Die WO 02/103236 A1 bezieht sich allgemein auf das Gebiet von hydraulischen Geräten und Systemen. Die WO 02/103236 A1 offenbart eine Rückgewinnungsvorrichtung zum Auffangen von aus einer Hydraulikfluidleitung austretendem Fluid und zum Zurückführen des Fluids in das Hydrauliksystem. Die Vorrichtung kann in jede hydraulisch angetriebene Maschine eingebaut werden, wie z. B. in eine Müllpresse oder in eine Frachttransportausrüstung auf einem Schiff. Die Vorrichtung umfasst eine innere Fluidleitung, die einen bestimmten Außendurchmesser aufweist und zum Befördern von Hydraulikfluid zwischen zwei Punkten in einem Hydrauliksystem, beispielsweise zwischen einer Fluidpumpe und einem fluidbetriebenen Mechanismus dient. Die Vorrichtung enthält auch eine Verstärkungshülse mit einem Innendurchmesser der Verstärkungshülse, der größer ist als der Außendurchmesser der inneren Fluidleitung, um die innere Fluidleitung aufzunehmen. Die Vorrichtung umfasst auch eine äußere Fluidleitung mit einem Innendurchmesser der äußeren Fluidleitung, der größer als der Außendurchmesser der Verstärkungshülse ist, um die Verstärkungshülse und die innere Fluidleitung aufzunehmen, so dass ein im Wesentlichen ringförmiger Aufnahmeraum zwischen der Verstärkungshülse und der äußeren Fluidleitung bereitgestellt wird. Die innere und äußere Fluidleitung sind konzentrisch an einem ersten Fluidleitungsende mit höherem Druck mit einer Kopplungsstruktur und an einem zweiten Fluidleitungsende mit niedrigerem Druck mit einer Verteilerstruktur verbunden.

Aus der US2014/0306448 A1 ist ein Rohr-Rückhaltesystem bekannt, das in einer Reihe von Anwendungen verwendet werden kann, einschließlich direkter Erdverlegung, oberirdischer Verwendung im Freien, Verwendung in Innenräumen bei erhöhtem Druck zur Sicherheit und / oder anderen sekundären Rückhaltesystemen und Erfassungssystemen für petrochemische Leitungen. Das Rohrrückhaltesystem weist ein Anschlussstück zur Verwendung mit Metallrohren auf, wobei das Anschlussstück folgende Bauteile umfasst: einen Adapter, wobei der Adapter einen Längskanal für den Fluidfluss aufweist; einen Körper zum Aufnehmen des Schlauchs; ein Metalldichtungselement, das zwischen dem Adapter und dem Körper angeordnet ist; eine Mutter; einen Mantelverriegelungsring, der radial einwärts von einem Abschnitt der Mutter positioniert ist, wobei der Mantelverriegelungsring zum Herstellen einer mechanischen Verbindung mit einem Außenmantel des Schlauchs dient; und mindestens ein Befestigungselement, das die Mutter, den Körper und den Adapter verbindet.

Aus der gattungsbildenden DE 10 2016 005 972 A1 ist eine Kurbelgehäuseentlüftung für eine Verbrennungskraftmaschine bekannt. Die Kurbelgehäuseentlüftung weist wenigstens eine Entlüftungsleitung zum Abführen eines Gases aus einem Kurbelgehäuse der Verbrennungskraftmaschine auf, wobei wenigstens ein Hüllelement vorgesehen ist, welches zumindest einen Teilbereich der Entlüftungsleitung außenumfangsseitig umgibt und von dem Teilbereich beabstandet ist, sodass durch den Teilbereich und das Hüllelement ein Diagnosevolumen begrenzt ist, welches fluidisch mit einer Regenerierleitung zum Regenerieren eines Adsorptionsfilters der Verbrennungskraftmaschine verbunden ist.

Der Erfindung liegt daher die Aufgabe zugrunde, die Gefahr von undichten bzw. nicht richtig montierten Schlauchvorrichtungen zu vermeiden.

Diese der Erfindung der zugrunde liegende Aufgabe wird nun durch eine Anordnung mit den Merkmalen des Patentanspruchs 1 gelöst. Die Schlauchvorrichtung weist eine Diagnoseleitung auf, wobei über die Diagnoseleitung ein Fehlluftstrom detektierbar ist, wenn die Schlauchvorrichtung undicht ist oder undicht angeschlossen oder nicht angeschlossen ist. Dies hat den Vorteil, dass die Funktionsweise der Schlauchvorrichtung zur Entlüftung sicher gewährleistet ist. Wenn die Schlauchvorrichtung korrekt montiert ist und die Schlauchvorrichtung selbst nicht undicht ist, strömt über die Diagnoseleitung kein Fehlluftstrom. Wenn die Schlauchvorrichtung jedoch undicht ist, nicht richtig angeschlossen ist oder überhaupt nicht angeschlossen ist, so strömt über die Diagnoseleitung ein Fehlluftstrom, der mittels eines Drucksensors detektiert wird. Der Fehlluftstrom führt dabei zur Frischluftanlage, insbesondere zum Saugrohr.

Wenn die Schlauchvorrichtung korrekt montiert und dicht ist, so liegt ein freies, offenes Ende der Diagnoseleitung abdichtend an einem Bauteil an. Der Außenmantel ist am Turboladergehäuse als blindes, abgedichtetes Ende befestigt. Zwischen der Stirnseite des Kupplungsteils, das das Ende der Diagnoseleitung bildet, und dem Bauteil ist vorzugsweise ein Dichtring angeordnet, um die Dichtigkeit der Verbindung zu gewährleisten.

Es weist die Schlauchvorrichtung eine Rohr-In-Rohr-Konstruktion auf. Hierzu weist die Schlauchvorrichtung einen Innenschlauch und einen Außenschlauch auf, wobei der Innenschlauch innerhalb des Außenschlauchs angeordnet ist. Durch den Innenschlauch werden nun die Blow-By-Gase abgeleitet. Der Innenschlauch dient somit als Blow-By-Leitung. Während eines Vollastbetriebs werden Blow-By-Gase aus dem Ölabscheider in den Frischlufttrakt gefördert. Während einer Vollast gewährleistet der Abgasturbolader einen hohen Druckaufbau und es herrscht im Saugrohr ein erhöhter Druck. Während einer Teillast des Verbrennungsmotors entsteht im Saugrohr ein Unterdruck und der Turbolader liefert nur einen geringen oder keinen Druckaufbau. Hierbei wird Frischluft vom Einlasstrakt, nämlich vom Turbolader ins Saugrohr über die Blow-By-Leitung gefördert. Zwischen dem Innenschlauch und dem Außenschlauch verbleibt ein Ringraum, der nun als Diagnoseleitung dient. Wenn der Innenschlauch undicht ist, entsteht wiederum ein Fehlluftstrom in der Diagnoseleitung, d.h. im Ringraum zwischen dem Innenschlauch und dem Außenschlauch. Diese Anordnung erfordert nur einen geringen Bauraum. In besonders bevorzugter Ausgestaltung sind der Außenschlauch und/oder der Innenschlauch als Wellschlauch ausgebildet.

Die Schlauchvorrichtung weist ein Kupplungsteil auf, wobei der Innenschlauch an einer ersten Außenumfangsfläche des Kupplungsteils angreift und der Außenschlauch an einer zweiten Außenumfangsfläche angreift, wobei eine Eintrittsöffnung in eine Außenleitung im Kupplungsteil mündet, wobei die Außenleitung als Diagnoseleitung dient.

Die Schlauchvorrichtung ist einerseits an einem Ölabscheidergehäuse anschließbar, wobei das Ölabscheidergehäuse mit einem Saugrohr in Fluidverbindung steht und das Ölabscheidergehäuse ein mit der Diagnoseleitung in Fluidverbindung stehenden Diagnosekanal aufweist. Eine Druckschwankung im Diagnosekanal kann dabei mittels eines Drucksensors detektiert werden. Der Fehlluftstrom wird in das Saugrohr geführt und kann dort mittels eines Drucksensors detektiert werden. Bei einer Fehlmontage am Turbolader, einem beschädigten Außenschlauch und Fehlmontage am Saugrohr ist eine Öffnung zur Außenluft geschaffen, wodurch das Saugrohr Luft ansaugen kann. Diese Fehlluft wird über eine Ladungswechselregelung des Verbrennungsmotors erkannt, woraufhin ein Fehler erkannt und ausgegeben wird.

Das Kupplungsteil stellt die Verbindung zwischen dem Innenschlauch und dem Außenschlauch und beispielsweise dem Anschlussstutzen dar. Das Kupplungsteil weist eine erste Außenumfangsfläche auf, auf die der Innenschlauch aufgesteckt ist. Ferner weist das Kupplungsteil eine zweite Außenumfangsfläche auf, auf die der Außenschlauch aufgesteckt ist. Hierzu kann das Kupplungsteil im Wesentlichen rohrförmig ausgebildet sein. Durch diese Innenleitung sind nun die Blow-By-Gase aus dem Innenschlauch weiterleitbar. Ferner weist das Kupplungsteil eine Außenleitung auf, die sich insbesondere zumindest teilweise in einer Mantelfläche des Kupplungsteil erstreckt. Durch diese Außenleitung ist der Fehlstrom der Diagnoseleitung zu dem Diagnosekanal weiterleitbar. Diese Außenleitung weist eine Mündung an einer Außenumfangsfläche auf, die von einer Innenumfangsfläche des Anschlussstutzens im eingesteckten Zustand begrenzt ist. Dieser Innenraum wird vorzugsweise durch zwei am Außenumfang des Innenteils angeordneten Dichtungen, insbesondere entsprechend O-Ringe, begrenzt.

Eine besonders einfach zu montierende Verbindung ist dadurch bereitgestellt, dass das Kupplungsteil mittels einer Rastverbindung an einem Stutzen anschließbar ist.

Die Rastverbindung kann in einfach herzustellender Weise dadurch gebildet sein, dass an dem Außenring mindestens eine Rastnase ausgebildet ist, wobei die mindestens eine Rastnase mit einer an einer Außenumfangsfläche des Stutzens ausgebildeten Haltekontur zusammenwirkt.

Die Schlauchvorrichtung ist einerseits an dem Ölabscheidergehäuse anschließbar, wobei das Ölabscheidergehäuse einen mit dem Saugrohr und der Diagnoseleitung in Fluidverbindung stehenden Diagnosekanal aufweist. Über diesen Diagnosekanal wird der Fehlluftstrom weitergeleitet zum Saugrohr. Im Saugrohr kann ein entsprechender Sensor angeordnet sein, der den Fehlluftstrom detektiert. Der Sensor kann als Drucksensor ausgebildet sein.

Das eine Bauteil, insbesondere der Ölabscheider weist einen Anschlussstutzen auf. Die Schlauchvorrichtung weist an jedem Ende ein Kupplungsteil auf. In bevorzugter

Ausgestaltung ist an jedem Ende ein entsprechendes Kupplungsteil angeordnet, wobei die Kupplungsteile nicht baugleich ausgeführt sein müssen.

Das Kupplungsteil kann selbst zweiteilig oder mehrteilig ausgebildet sein. Diese beiden oder mehrere Teile können durch eine Schweißverbindung, eine Klebeverbindung, eine Steckverbindung oder dergleichen miteinander verbunden sein, um eine möglichst dichte Verbindung zu erzielen. Der Anschlussstutzen und das Kupplungsteil sind vorzugsweise über eine Rastverbindung miteinander verbunden. Die Rastverbindung ist insbesondere öffenbar ausgebildet. Hierzu kann das Kupplungsteil einen den Anschlussstutzen außen umgreifenden Ring aufweisen, wobei der Ring über eine Rastverbindung mit der Außenfläche des Anschlussstutzens zusammenwirkt. Der Ring kann dazu entsprechende Rastnasen aufweisen, die an einer Rastkontur an der Außenumfangsfläche des Anschlussstutzens im montierten Zustand eingreifen. Dies stellt eine besonders einfach handhabbare Verbindung dar.

In alternativer Ausgestaltung kann die Schlauchvorrichtung durch eine Schraubverbindung mit den entsprechenden Bauteilen verbunden sein.

Es gibt nun eine Vielzahl von Möglichkeiten, die erfindungsgemäße Anordnung auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: in einer schematischen Schnittansicht ein Ende einer Schlauchvorrichtung, die an einem Ölabscheider angeschlossen ist,
- Fig. 2: in einer weiteren schematischen Schnittansicht einen weiteren Teil der Schlauchvorrichtung, das an ein Turboladergehäuse angeschlossen ist,
- Fig. 3: in einer schematischen perspektivischen Ansicht ein Kupplungsteil der Schlauchvorrichtung, das zum Anschluss an einen Stutzen am Ölabscheidergehäuse dient,
- Fig. 4: in einer schematischen Explosionsdarstellung das Kupplungsteil.

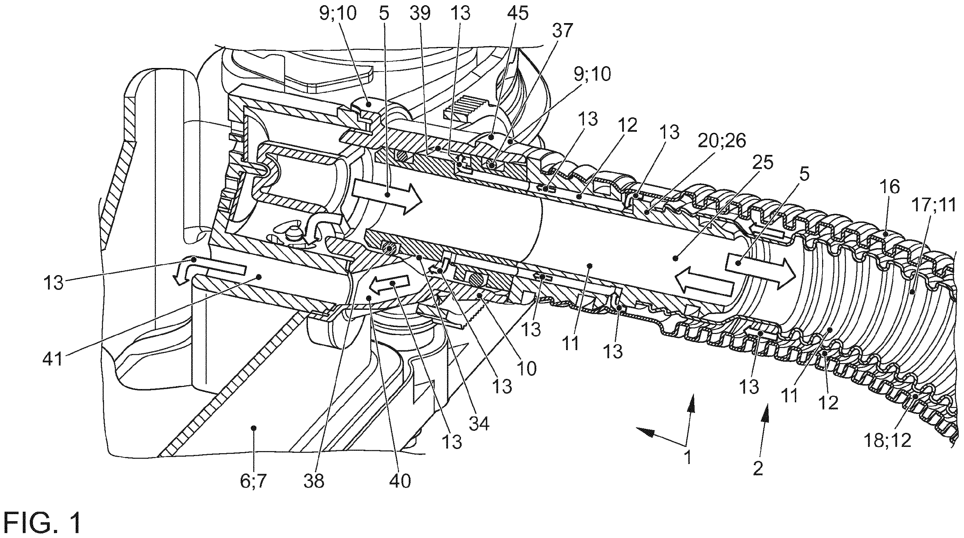

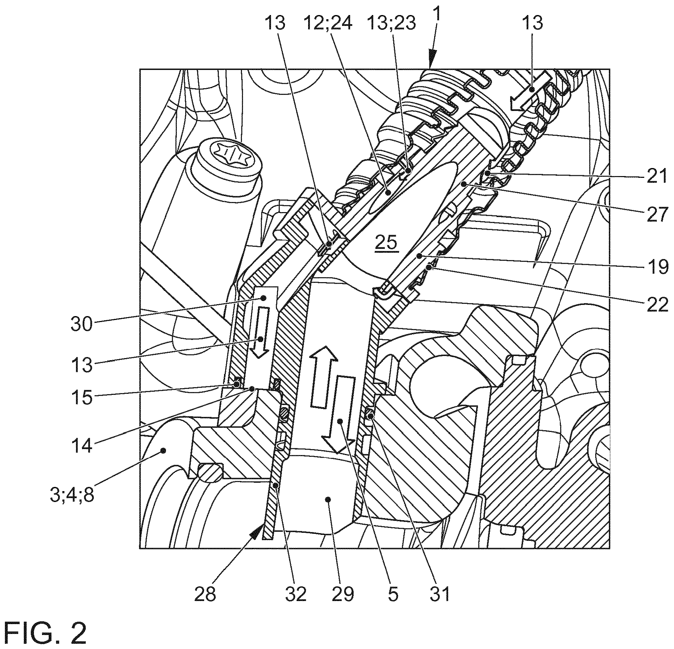

In den Fig. 1 bis 4 ist eine Anordnung 1 zum Ableiten von Blow-By-Gasen 5 aus einem nicht dargestellten Kurbelgehäuse eines Verbrennungsmotors gut zu erkennen. Die Blow-By-Gase 5 sind über eine Schlauchvorrichtung 2 einer Frischluftanlage 3 zuführbar. Dargestellt ist hier nur ein Teil eines Abgasturboladergehäuses 4. Die entsprechenden Blow-By-Gase 5 (hier durch entsprechende Pfeile angedeutet) werden ausgehend von einem Ölabscheider 6 durch die Schlauchvorrichtung 2 zu der Verdichterseite des Abgasturboladers geleitet. Von dem Ölabscheider 6 ist hier insbesondere das entsprechende Ölabscheidergehäuse 7 dargestellt. Der Ölabscheider 6 steht in Fluidverbindung mit dem Kurbelgehäuse. Die Schlauchvorrichtung 2 ist einerseits an einem der Frischluftanlage zugeordneten Bauteil 8, nämlich an dem Abgasturboladergehäuse 4 und andererseits an einem mit dem Kurbelgehäuse in Fluidverbindung stehenden Bauteil 9, nämlich hier einem Stutzen 10 angeschlossen. Der Stutzen 10 ist am Ölabscheidergehäuse 7 montiert. Die Schlauchvorrichtung 2 weist nun eine Blow-By-Leitung 11 auf.

Die eingangs genannten Nachteile sind nun dadurch vermieden, dass die Schlauchvorrichtung 2 eine Diagnoseleitung 12 aufweist, wobei über die Diagnoseleitung 12 ein Fehlluftstrom 13 detektierbar, wenn die Schlauchvorrichtung 2 undicht ist, undicht angeschlossen ist oder gar nicht angeschlossen ist. Der Fehlluftstrom 13 ist hier wiederrum durch entsprechende Pfeile angedeutet. Die Diagnoseleitung 12 endet bei korrekter Montierung der Schlauchvorrichtung 2 blind, an einer Stirnseite 14 am Abgasturboladergehäuse 4. Insbesondere ist hierein Dichtring 15 zwischen den Stirnflächen der Mündung der Diagnoseleitung 12 und dem Abgasturboladergehäuse 4 bzw. der Stirnseite 14 angeordnet.

Die Schlauchvorrichtung 2 weist einen Außenschlauch 16 und einen Innenschlauch 17 auf. Der Innenschlauch 17 dient als Blow-By-Leitung, d.h. im Inneren des Innenschlauchs 17 werden die Blow-By-Gase 5 weitergeleitet. Der Außenschlauch 16 weist einen größeren Durchmesser als der Innenschlauch 17 auf. Zwischen dem Außenschlauch 16 und dem Innenschlauch 17 verbleibt ein Ringraum 18, der einen Teil der Diagnoseleitung 12 bildet.

Die Schlauchvorrichtung 2 weist nun zwei Kupplungsteile 19, 20 auf. Die Kupplungsteile 19, 20 weisen schlauchseitig, d.h. in Richtung des Außenschlauchs 16 und des Innenschlauchs 17, eine erste Außenumfangsfläche 21 auf, auf die der Innenschlauch 17 aufgesteckt ist. Ferner weisen die Kupplungsteile 19, 20 eine zweite Außenumfangsfläche 22 auf, auf die der Außenschlauch 16 aufgesteckt ist. Zwischen der ersten Außenumfangsfläche 21 und der zweiten Außenumfangsfläche 22 ist mindestens eine Eintrittsöffnung 23, insbesondere sind mehrere Eintrittsöffnungen 23 ausgebildet, die in eine Außenleitung 24 münden. Die Außenleitung 24 bildet einen Teil der Diagnoseleitung 12.

Die Kupplungsteile 19, 20 sind röhrenförmig ausgebildet und leiten in ihrem Inneren, d.h. in dem entsprechenden zylindrischen Hohlraum 25 die Blow-By-Gase. Der Hohlraum 25 bildet damit einen Teil der Blow-By-Leitung 11. Dieser erste Bereich der Kupplungsteile 19, 20 kann durch ein erstes Bauteil 26 bzw. 27 gebildet sein. Zum Anschluss der Schlauchvorrichtung 2 an die Frischluftanlage 3 bzw. an das Abgasturboladergehäuse 4 ist nun hier ein insbesondere gekröpft ausgebildetes Bauteil 28 vorgesehen, das mit dem Bauteil 27 beispielswiese verschweißt ist oder durch eine Klebeverbindung oder Flügeverbindung verbunden ist. Das Bauteil 28 weist nun einen Kanal 29 für die Blow-By-Gase und einen Kanal 30 auf, der einen Teil der Diagnoseleistung 12 bildet. Der Kanal 30 endet stirnseitig am Abgasturboladergehäuse 4 und ist dort mit dem Dichtring 15 dichtend angeordnet. Der Kanal 30 erstreckt sich etwas weiter in das Abgasturboladergehäuse 4 hinein und ist dort an der Außenumfangsfläche mittels eines Dichtrings 31 abdichtend angeordnet. Ein entsprechend röhrenförmiger Randbereich 32 begrenzt hierbei den Kanal 30. An der Außenumfangsfläche des röhrenförmigen Wandbereichs 32 liegt der Dichtring 31 an.

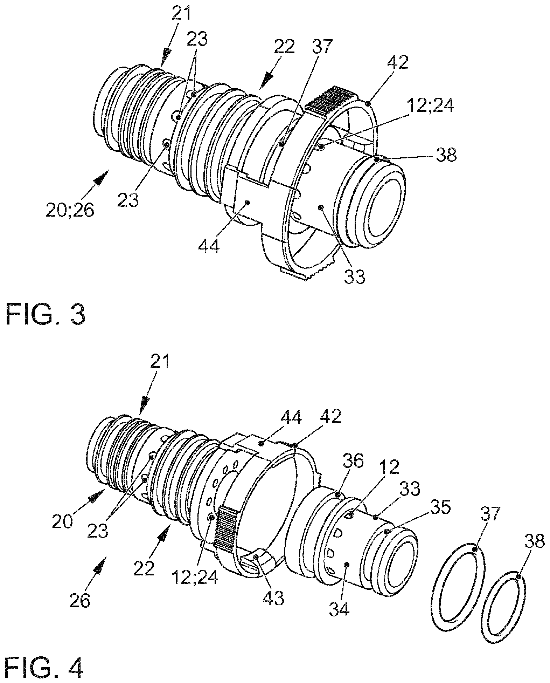

Im Folgenden darf nun auf Fig. 1 und Fig. 4 näher eingegangen werden:
Das Bauteil 26 ist mit einem weiteren Bauteil 33 verbunden, in dem die Außenleitung 24 weitergeführt ist. Die Außenleitung 24 tritt hier an einer Außenumfangsfläche 34 aus, die zwischen zwei Ringnuten 35, 36 liegt. In den Ringnuten 35, 36 sind jeweils O-Ringe 37, 38 angeordnet. Die Außenumfangsfläche 34 begrenzt dabei einen Teil eines Ringraumes mit einer Innenumfangsfläche 39 des Stutzens 10. Von der Innenumfangsfläche 39 geht ein Diagnosekanal 40 innerhalb des Bauteils 9 bzw. des entsprechenden Stutzens 10 ab, der wiederrum in einem weiteren Diagnosekanal 41 in das Abgasturboladergehäuse 4 mündet. Die O-Ringe 37, 38 dichten hier den Ringraum zwischen der Außenumfangsfläche 34 gegenüber den entsprechenden anliegenden Innenumfangsflächen des Stutzens 10 ab.

Das Kupplungsteil 19 ist insbesondere mit dem Abgasturboladergehäuse 4 verschraubt. Das Kupplungsteil 20 wird an dem Stutzen 10 mittels einer Rastverbindung verbunden. Dazu weist das Kupplungsteil 20 einen Außenring 42 auf, an dem mindestens eine Rastnase 43 ausgebildet ist. Der Außenring 42 ist über zwei Arme 44 mit dem restlichen Körper verbunden. Wenn nun das Bauteil 9 auf den Stutzen 10 aufgeschoben wird, so werden die Rastnasen 43 über eine Haltekontur 45 am Außenumfang des Stutzens 10 aufgeschoben und rasten dort ein.

### Bezugszeichenliste

- 1: Anordnung
- 2: Schlauchvorrichtung
- 3: Frischluftanlage
- 4: Abgasturboladergehäuse
- 5: Blow-By-Gase
- 6: Ölabscheider
- 7: Ölabscheidergehäuse
- 8: Bauteil
- 9: Bauteil
- 10: Stutzen
- 11: Blow-By-Leitung
- 12: Diagnoseleitung
- 13: Fehlluftstrom
- 14: Stirnseite
- 15: Dichtring
- 16: Außenschlauch
- 17: Innenschlauch
- 18: Ringraum
- 19: Kupplungsteil
- 20: Kupplungsteil
- 21: erste Außenumfangsfläche
- 22: zweite Außenumfangsfläche
- 23: Eintrittsöffnung
- 24: Außenleitung
- 25: Hohlraum
- 26: Bauteil
- 27: Bauteil
- 28: Bauteil
- 29: Kanal für Blow-By-Gase
- 30: Kanal
- 31: Dichtring
- 32: röhrenförmiger Wandbereich
- 33: Bauteil
- 34: Außenumfangsfläche
- 35: Ringnut
- 36: Ringnut
- 37: O-Ring
- 38: O-Ring
- 39: Innenumfangsfläche
- 40: Diagnosekanal
- 41: Diagnosekanal
- 42: Außenring
- 43: Rastnase
- 44: Arm
- 45: Haltekontur

## Patentansprüche

1. Anordnung (1) mit einer Frischluftanlage, mit einer Schlauchvorrichtung (2) und mit einem Kurbelgehäuse eines Verbrennungsmotors, zum Ableiten von Blow-By-Gasen (5) aus dem Kurbelgehäuse des Verbrennungsmotors, wobei die Blow-By-Gase (5) über die Schlauchvorrichtung (2) der Frischluftanlage (3) zuführbar sind, wobei die Schlauchvorrichtung (2) einerseits an einem der Frischluftanlage (3) zugeordneten Bauteil (8) und andererseits und an einem mit dem Kurbelgehäuse in Fluidverbindung stehenden Bauteil (9) angeschlossen ist, wobei die Schlauchvorrichtung (2) eine Blow-By-Leitung (11) aufweist, wobei eine Diagnoseleitung (12) vorhanden ist, wobei über die Diagnoseleitung (12) ein Fehlluftstrom (13) detektierbar ist, wenn die Schlauchvorrichtung (2) undicht angeschlossen oder nicht angeschlossen ist, wobei die Schlauchvorrichtung (2) die Diagnoseleitung (12) aufweist, wobei die Schlauchvorrichtung (2) einen Außenschlauch (16) und einen Innenschlauch (17) aufweist, wobei der Innenschlauch (17) als Blow-By-Leitung (11) dient und ein Ringraum (18) zwischen dem Außenschlauch (16) und dem Innenschlauch (17) als Diagnoseleitung (12) dient, wobei die Schlauchvorrichtung (2) mindestens ein Kupplungsteil (19, 20) aufweist, wobei der Innenschlauch (17) an einer ersten Außenumfangsfläche (21) des Kupplungsteils (19, 20) angreift und der Außenschlauch (16) an einer zweiten Außenumfangsfläche (22) des Kupplungsteils (19, 20), wobei eine Eintrittsöffnung (23) in eine Außenleitung (24) im Kupplungsteil (19, 20) mündet, wobei die Außenleitung (24) als Diagnoseleitung (12) dient.

2. Anordnung nach Anspruch 1, **dadurch gekennzeichnet, dass** ein offenes Ende der Diagnoseleitung (12) im korrekt montierten Zustand der Schlauchvorrichtung (2) abdichtend an einem der Bauteile (8, 9) anliegt.

3. Anordnung nach Anspruch 2, **dadurch gekennzeichnet, dass** zwischen einer Stirnseite der Schlauchvorrichtung (2), nämlich um das Ende der Diagnoseleitung (12), und dem Bauteil (8) ein Dichtring (15) angeordnet ist.

4. Anordnung nach einem der vorstehenden Ansprüche, **dadurch gekennzeichnet, dass** die Schlauchvorrichtung (2) einerseits an einem Ölabscheidergehäuse (7) anschließbar ist, wobei das Ölabscheidergehäuse (7) mit einem Saugrohr in Fluidverbindung steht und das Ölabscheidergehäuse (7) einen mit der Diagnoseleitung (12) in Fluidverbindung stehenden Diagnosekanal (41) aufweist.

5. Anordnung nach einem der vorstehenden Ansprüche, **dadurch gekennzeichnet, dass** das Kupplungsteil (19) mittels einer Rastverbindung an einem Stutzen (10) anschließbar ist.

6. Anordnung nach dem vorstehenden Anspruch, **dadurch gekennzeichnet, dass** an einem Außenring (42) des Kupplungsteils (19, 20) mindestens eine Rastnase (43) ausgebildet ist, wobei die mindestens eine Rastnase (43) mit einer an der Außenumfangsfläche des Stutzens (10) ausgebildeten Haltekontur (45) zusammenwirkt.

## Claims

1. Arrangement (1) having a fresh-air system, having a hose device (2) and having a crankcase of an internal combustion engine, for discharging blow-by gases (5) from the crankcase of the internal combustion engine, wherein the blow-by gases (5) can be supplied via the hose device (2) to the fresh-air system (3), wherein the hose device (2) is connected at one side to a component (8) assigned to the fresh-air system (3) and at the other side to a component (9) which is fluidically connected to the crankcase, wherein the hose device (2) has a blow-by line (11), wherein a diagnostic line (12) is provided, wherein an erroneous air flow (13) can be detected via the diagnostic line (12) if the hose device (2) is connected in unsealed fashion or is not connected, wherein the hose device (2) has the diagnostic line (12), wherein the hose device (2) has an outer hose (16) and an inner hose (17), wherein the inner hose (17) serves as blow-by line (11) and an annular space (18) between the outer hose (16) and the inner hose (17) serves as diagnostic line (12), wherein the hose device (2) has at least one coupling part (19, 20), wherein the inner hose (17) engages on a first outer circumferential surface (21) of the coupling part (19, 20) and the outer hose (16) engages on a second outer circumferential surface (22) of the coupling part (19, 20), wherein an inlet opening (23) opens into an outer line (24) in the coupling part (19, 20), wherein the outer line (24) serves as diagnostic line (12).

2. Arrangement according to Claim 1, **characterized in that** an open end of the diagnostic line (12) lies sealingly against one of the components (8, 9) in the correctly installed state of the hose device (2).

3. Arrangement according to Claim 2, **characterized in that** a sealing ring (15) is arranged between an end side of the hose device (2), specifically around the end of the diagnostic line (12), and a component (8).

4. Arrangement according to any of the preceding claims, **characterized in that** the hose device (2) is connectable at one side to an oil separator housing (7), wherein the oil separator housing (7) is fluidically connected to an intake pipe and the oil separator housing (7) has a diagnostic channel (41) which is fluidically connected to the diagnostic line (12).

5. Arrangement according to any of the preceding claims, **characterized in that** the coupling part (19) is connectable by means of a detent connection to a connector (10).

6. Arrangement according to the preceding claim, **characterized in that** at least one detent lug (43) is formed on an outer ring (42) of the coupling part (19, 20), wherein the at least one detent lug (43) interacts with a holding contour (45) formed on the outer circumferential surface of the connector (10).

## Revendications

1. Agencement (1) muni d'une unité d'air frais, muni d'un dispositif à tuyaux (2) et muni d'un carter d'un moteur à combustion, pour l'évacuation de gaz de fuite (5) du carter du moteur à combustion, les gaz de fuite (5) pouvant être acheminés dans l'unité d'air frais (3) par l'intermédiaire du dispositif à tuyaux (2), le dispositif à tuyaux (2) étant raccordé d'un côté à un composant (8) associé à l'unité d'air frais (3) et d'un autre côté à un composant (9) en connexion fluidique avec le carter, le dispositif à tuyaux (2) comprenant une conduite de fuite (11), une conduite de diagnostic (12) étant présente, un courant d'air d'erreur (13) pouvant être détecté par l'intermédiaire de la conduite de diagnostic (12) lorsque le dispositif à tuyaux (2) est raccordé de manière non étanche ou n'est pas raccordé,
le dispositif à tuyaux (2) comprenant la conduite de diagnostic (12), le dispositif à tuyaux (2) comprenant un tuyau extérieur (16) et un tuyau intérieur (17), le tuyau intérieur (17) servant de conduite de fuite (11) et un espace annulaire (18) entre le tuyau extérieur (16) et le tuyau intérieur (17) servant de conduite de diagnostic (12), le dispositif à tuyaux (2) comprenant au moins une partie d'accouplement (19, 20), le tuyau intérieur (17) entrant en prise avec une première surface périphérique extérieure (21) de la partie d'accouplement (19, 20) et le tuyau extérieur (16) avec une deuxième surface périphérique extérieure (22) de la partie d'accouplement (19, 20), une ouverture d'entrée (23) dans une conduite extérieure (24) débouchant dans la partie d'accouplement (19, 20), la conduite extérieure (24) servant de conduite de diagnostic (12).

2. Agencement selon la revendication 1, **caractérisé en ce qu'**une extrémité ouverte de la conduite de diagnostic (12) repose, à l'état monté correctement du dispositif à tuyaux (2), en étanchéité sur un des composants (8, 9).

3. Agencement selon la revendication 2, **caractérisé en ce qu'**un anneau d'étanchéité (15) est agencé entre un côté frontal du dispositif à tuyaux (2), à savoir autour de l'extrémité de la conduite de diagnostic (12), et le composant (8).

4. Agencement selon l'une quelconque des revendications précédentes, **caractérisé en ce que** le dispositif à tuyaux (2) peut être raccordé d'un côté à un boîtier de séparateur d'huile (7), le boîtier de séparateur d'huile (7) étant en connexion fluidique avec un tube d'aspiration et le boîtier de séparateur d'huile (7) comprenant un canal de diagnostic (41) en connexion fluidique avec la conduite de diagnostic (12) .

5. Agencement selon l'une quelconque des revendications précédentes, **caractérisé en ce que** la partie d'accouplement (19) peut être raccordée au moyen d'un assemblage par encliquetage à un embout (10).

6. Agencement selon la revendication précédente, **caractérisé en ce qu'**au moins un bec d'encliquetage (43) est formé sur un anneau extérieur (42) de la partie d'accouplement (19, 20), l'au moins un bec d'encliquetage (43) coopérant avec un contour de maintien (45) formé sur la surface périphérique extérieure de l'embout (10).
